# EUROPEAN PATENT APPLICATION

(11) **EP 2 273 699 A1**
(43) Date of publication of application: **12.01.2011**
(21) Application number: 09305621.6
(22) Date of filing: 30.06.2009
(51) Int. Cl.: H04B 10/142, H04B 10/26, H04B 10/12

(54) **A method for bidirectional transmission of signals, and a transceiver therefor**

(71) Applicant: Alcatel Lucent, 75008 Paris (FR)
(72) Inventor: Veith, Gustav, 75378 Bad Liebenzell (DE); Templ, Wolfgang, 74372 Sersheim (DE)
(74) Representative: Kleinbub, Oliver

(57) **Abstract**

The invention concerns a method for bidirectional transmission of signals between a first device (CORAS1) and a further device (TER3) via an intermediate device (CORAS2), wherein an optical downlink data signal is transmitted on an optical downlink carrier frequency from the first device (CORAS1) to said intermediate device (CORAS2), the optical downlink data signal is converted to an electrical downlink data signal in said intermediate device (CORAS2), the electrical downlink data signal is transmitted from said intermediate device (CORAS2) to the further device (TER3) via a wireless connection, an uplink data signal is transmitted from the further device (TER3) to said intermediate device (CORAS2) via a wireless connection, the electrical uplink data signal is modulated on an optical uplink carrier frequency in said intermediate device (CORAS2) resulting in an optical uplink data signal, which is transmitted from said intermediate device (CORAS2) to the first device (CORAS1), and a transceiver therefor.

## Description

The invention relates to a method for bidirectional transmission of signals according to the preamble of claim 1, and a transceiver according to the preamble of claim 9.

Wireless communication standards, like e.g. Universal Mobile Telecommunications System (UMTS), High Speed Downlink Packet Access (HSDPA), High Speed Uplink Packet Access (HSUPA), Worldwide Interoperability for Microwave Access (WiMAX), Third Generation Partnership Project Long Term Evolution(3GPP LTE), are evolving rapidly in order to satisfy the growing demand for broadband mobile services. A uniform base station architecture enhanced by software defined radio (SDR) will enable the operators to re-use their existing infrastructure for a flexible upgrade to multiple frequency bands and multiple standards.

The coverage of a certain service area in a cellular radio network is provided by several radio base stations, which are connected to a core network to serve connections to and from mobile users within the service area. A radio base station contains a baseband unit and at least one antenna unit. In order to increase radio coverage and capacity, modern base stations use several sector antennas.

In order to increase flexibility of the base stations, it is desirable to allow the antennas to be located remotely from the baseband unit. This has lead to the development of active antenna systems which are also termed remote access stations (RAS). Typically, one remote access station contains one sector antenna, but there are also systems known, which have remote access stations with more than only one sector antenna.

In conventional mobile access networks, remote access stations are connected to the base stations by wireless radio frequency signals. The feeder reach length between the base station and the remote access stations and the throughput capacity of the remote access stations' radio signals are limited due to path dependent radio transmission distortions and losses and due to electromagnetic compatibility (EMC) requirements, interferences and crosstalk.

Thus, this conventional solution might not be applicable for future remote access stations (RAS) capacity upgrade required by novel broadband mobile services.

The object of the invention is thus to propose a flexible method for transmission of signals via remote access stations with extended feeder reach length between the base station and the remote access stations and extended throughput capacity of the remote access stations' radio signals.

This object is achieved by a method according to the teaching of claim 1, and a transceiver according to the teaching of claim 9.

The main idea of the invention is to transmit downlink and uplink data signals between a base station and a remote access station optically, to transmit the downlink and uplink data signals between the remote access station and a terminal as wireless radio frequency data signals, and to convert the downlink data signals from optical signals to electrical signals and the uplink signals from electrical signals to optical signals in the remote access station.

The invention addresses a new technical approach to extend the feeder reach length and throughput capacity of remote access stations based upon a novel bidirectional photonic radio transceiver. The bidirectional photonic radio transceiver contains opto-electrical converters for the downstream path as well as electro-optical converters for the upstream path.

The new concept of combined optics and radio access enables to essentially extend the feeder reach lengths for remote access stations, including conventional radio based antenna stations, optical feeder based remote access stations, and cascaded optical feeder based remote access stations. Due to the high optical transmission bandwidth, e.g. over an optical fiber or via an optical free-space connection, the overall throughput capacity and feeder reach lengths of remote access stations can be upgraded deliberately in future when new broadband services and wireless communication standards are evolving.

The digital or analogue end-to-end connection of radio access networks by optical fiber feeders enables central generation and distribution of radio frequency carrier signals with the option of transparent data transmission and thus with the option of relocating intelligence from base stations into the network hence allowing for significant increase of functional flexibility, overall capacity and energy efficiency of cognitive radio networks going along with reduced complexity of base stations or remote access stations.

Further developments of the invention can be gathered from the dependent claims and the following description.

In the following the invention will be explained further making reference to the attached drawings.
Fig. 1 schematically shows a conventional communication network architecture.
Fig. 2 schematically shows a part of a communication network architecture with a combined optical and radio access according to an embodiment of the invention.
Fig. 3 schematically shows a bidirectional photonic radio transceiver with an intrinsic light source according to an embodiment of the invention.
Fig. 4 schematically shows a bidirectional photonic radio transceiver with a remote light source according to an embodiment of the invention.
Fig. 5 schematically shows a communication network architecture applying wavelength division multiplexing with a combined optical and radio access by bidirectional photonic radio transceivers with intrinsic light sources according to an embodiment of the invention.
Fig. 6 schematically shows a communication network architecture applying wavelength division multiplexing with a combined optical and radio access by bidirectional photonic radio transceivers with remote light sources according to an embodiment of the invention.
Fig. 7 schematically shows a communication network architecture applying wavelength division multiplexing with a combined optical and radio access by bidirectional photonic radio transceivers with central generation and distribution of optical reference carriers for heterodyne detection according to an embodiment of the invention.
Fig. 8 schematically shows a bidirectional photonic radio transceiver for heterodyne detection with an intrinsic light source for generating the optical uplink carrier frequency according to an embodiment of the invention.
Fig. 9 schematically shows a bidirectional photonic radio transceiver for heterodyne detection with a remote light source for generating the optical uplink carrier frequency according to an embodiment of the invention.

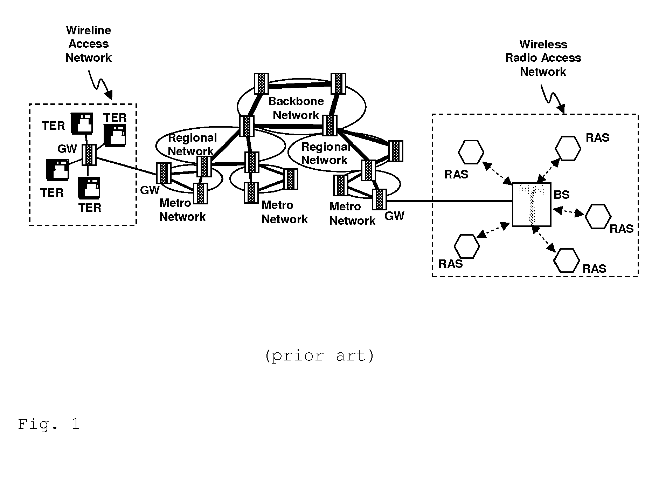

An example of the principle structure of a communication network for data transmission and reception is shown in fig. 1. The communication network comprises a backbone network, two regional networks, three metro networks, a wireline access network, and a wireless radio access network. The backbone network, the regional networks, and the metro networks comprise gateways GW for connections between the different networks. The wireline access network comprises a gateway GW for connection to a metro network and four terminals TER. The wireless radio access network comprises a base station BS for connection to a metro network and five remote access stations RAS.

In this example, the backbone network is connected to the two regional networks by two gateways, and the two regional networks are in turn connected to the three metro networks by three gateways. A gateway GW of a first metro network is connected to the gateway GW of the wireline access network, and a gateway GW of a second metro network is connected to the base station BS of the wireless radio access network.

Each of the four terminals TER is connected to the gateway GW of the wireline access network by means of a wireline connection, and each of the five remote access stations RAS is connected to the base station BS of the wireless radio access network by means of a wireless radio connections.

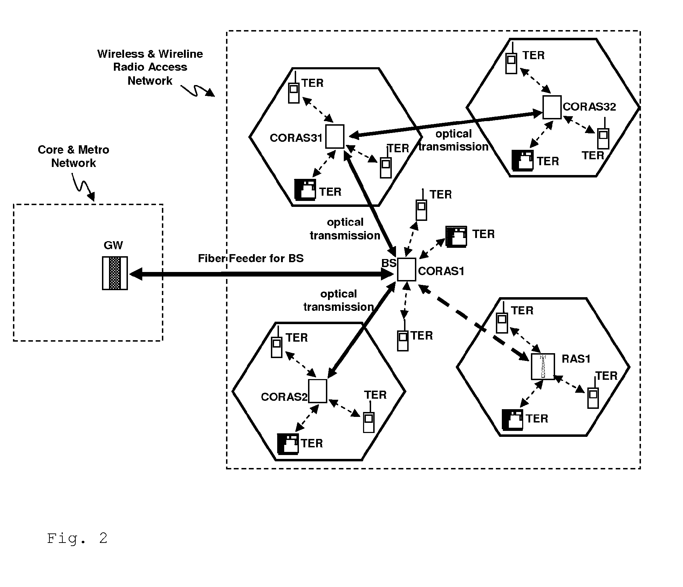

Fig. 2 illustrates the concept of a combined optical and radio access according to the invention. Fig. 2 shows a core and metro network and a wireless and wireline radio access network. For the sake of simplification, only a gateway GW of the core and metro network that is used for connection to the wireless and wireline radio access network is shown. The core and metro network in principle corresponds to the backbone, regional and metro networks as depicted in fig. 1. The wireless and wireline radio access network comprises a remote access station RAS1, four combined optical and radio remote access stations CORAS1, CORAS2, CORAS31 and CORAS32, and 15 terminals TER.

The gateway GW of the core and metro network is connected to the combined optical and radio remote access station CORAS1 by means of an optical connection, as e.g. an optical free-space connection or an optical fiber, which is indicated by a solid double arrow.

The combined optical and radio remote access station CORAS1 is connected to the remote access station RAS1 and to three terminals TER by means of wireless radio connections, which is indicated by dashed double arrows.

Furthermore, the combined optical and radio remote access station CORAS1 is connected to the combined optical and radio remote access stations CORAS2 and CORAS31 by means of optical connections, as e.g. optical free-space connections or optical fiber connections, which is indicated by solid double arrows.

The two combined optical and radio remote access stations CORAS31 and CORAS32 are interconnected by means of an optical connection, as e.g. an optical free-space connection or an optical fiber connection, which is indicated by a solid double arrow.

Three terminals TER are connected to the remote access station RAS1 and the four combined optical and radio remote access stations CORAS1, CORAS2, CORAS31 and CORAS32 respectively by means of wireless radio connections, which is indicated by dashed double arrows.

Data traffic that is sent from and to the terminals TER in the wireless and wireline radio access network is transmitted over the optical connection between the gateway GW of the core and metro network and the combined optical and radio remote access station CORAS1, which can be seen as a base station BS in this example, as it handles the access to the core network. The transmission of data traffic over the optical connection between the gateway GW of the core and metro network and the combined optical and radio remote access station CORAS1 is also called backhauling.

The data traffic for the different terminals TER is transmitted on different wavelengths over the optical connection between the gateway GW of the core and metro network and the combined optical and radio remote access station CORAS1. The combined optical and radio remote access station CORAS1 knows which remote access station or combined optical and radio remote access station is the serving access station for the different terminals TER and also knows whether the serving access station is directly connected or via further access stations e.g. by signaling messages received from the different access stations comprising information about their served terminals. Alternatively, the data traffic can comprise said information about the serving base station which can be evaluated in the combined optical and radio remote access station CORAS1.

In the combined optical and radio remote access station CORAS1, the downlink data traffic for the different terminals TER is optically demultiplexed and transmitted to the respective access station that is the serving access station for the respective terminal either over an optical connection or over a wireless radio connection.

In the remote access station RAS1 and in the four combined optical and radio remote access stations CORAS1, CORAS2, CORAS31 and CORAS32, the downlink data traffic for the different terminals TER is further electronically or optically demultiplexed and transmitted to the different terminals TER.

In an analogue manner, the uplink traffic from the terminals TER is optically multiplexed in the three combined optical and radio remote access stations CORAS2, CORAS31 and CORAS32 and optically transmitted to the combined optical and radio remote access station CORAS1. The uplink traffic from the remote access station RAS1 is transmitted over a wireless radio connection to the combined optical and radio remote access station CORAS1. In the combined optical and radio remote access station CORAS1, the optical uplink traffic is further multiplexed and optically transmitted to the gateway GW in the core and metro network.

Preferably, the downlink data and the uplink data are transmitted between the core and metro network and the respective remote access station RAS1, CORAS2, CORAS31 or CORAS32 as so-called IQ-data. As an alternative, the downlink data and the uplink data can be sent as PWM signals (PWM = Pulse Width Modulation), and could also be encoded additionally using e.g. Manchester Coding in another embodiment of the invention.

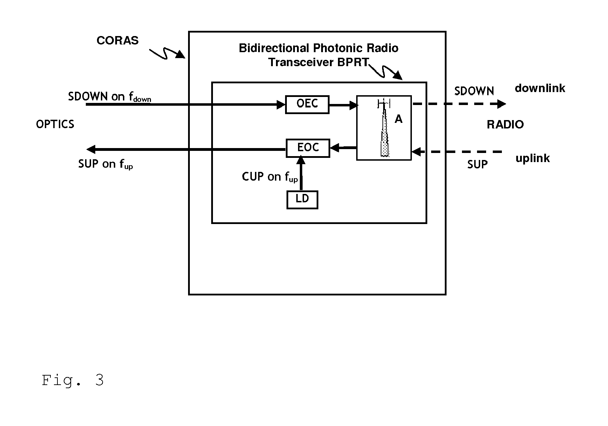

In order to provide the four combined optical and radio remote access stations CORAS1, CORAS2, CORAS31 and CORAS32 with the possibility to convert optical downlink data to electrical downlink data and to convert electrical uplink data to optical downlink data, the combined optical and radio remote access stations CORAS1, CORAS2, CORAS31 and CORAS32 are equipped with a bidirectional photonic radio transceiver according to the invention. Fig. 3 shows a first embodiment of such a bidirectional photonic radio transceiver BPRT comprised in a combined optical and radio remote access station CORAS with an intrinsic light source for generating an optical uplink carrier frequency fᵤₚ.

The bidirectional photonic radio transceiver BPRT comprises an opto-electrical converter OEC, an electro-optical converter EOC, an antenna network A, and a laser diode LD.

The antenna network A comprises a radio frequency transmitter with a digital-to-analogue converter and a radio frequency power amplifier, and a radio frequency receiver with an analogue-to-digital converter and a low noise amplifier which are not shown in fig. 3 for the sake of simplicity.

The bidirectional photonic radio transceiver BPRT has a first interface for receiving optical downlink data signals SDOWN on an optical downlink carrier frequency f_{down}. The first interface is connected to an input of the opto-electrical converter OEC. An output of the opto-electrical converter OEC is connected to the radio frequency transmitter of the antenna network A. The radio frequency receiver of the antenna network A is connected to a first input of the electro-optical converter EOC. An output of the electro-optical converter EOC is connected to a second interface for sending optical uplink data signals SUP on an optical uplink carrier frequency fᵤₚ. An output of the laser diode LD is connected to a second input of the electro-optical converter EOC.

The optical downlink data signals SDOWN on the optical downlink carrier frequency f_{down} are transmitted to the combined optical and radio remote access stations CORAS on an optical connection and are received at the first interface of the bidirectional photonic radio transceiver BPRT.

The optical downlink data signals SDOWN are converted to electrical downlink data signals in the opto-electrical converter OEC.

Preferably, said opto-electrical converter OEC comprises a so-called PIN-diode or a so-called avalanche-photo-diode.

The electrical downlink data signals are transmitted to the radio frequency transmitter of the antenna network A from which the downlink data signals are transmitted to terminals via wireless connections.

Uplink data signals SUP are transmitted from terminals to the combined optical and radio remote access station CORAS on wireless connections and are received at the antenna network A.

In the antenna network A, the electrical uplink data signals are amplified in the low noise amplifier and converted to the digital domain and are sent to the electro-optical converter EOC.

The laser diode LD generates an optical continuous wave signal CUP on an optical uplink carrier frequency fᵤₚ which is transmitted to the electro-optical converter EOC.

In the electro-optical converter EOC, the electrical uplink data signals are modulated on the optical uplink carrier frequency by means of the optical continuous wave signal CUP resulting in optical uplink data signals.

Preferably, said electro-optical converter EOC comprises an electroabsorption or lithiumniobate modulator for modulating the continuous wave signal CUP from the laser diode LD.

From the electro-optical converter EOC, the optical uplink data signals are transmitted via the second interface of the bidirectional photonic radio transceiver BPRT.

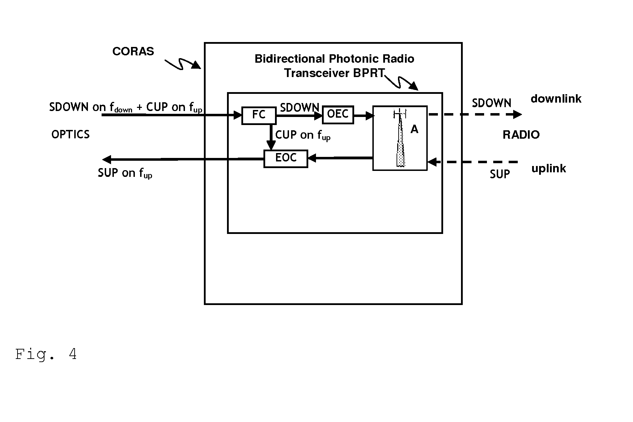

Fig. 4 shows a second embodiment of such a bidirectional photonic radio transceiver BPRT comprised in a combined optical and radio remote access station CORAS with a remote light source for generating an optical uplink carrier frequency fᵤₚ.

The bidirectional photonic radio transceiver BPRT comprises a wavelength selective fiber coupler FC, an opto-electrical converter OEC, an electro-optical converter EOC, and an antenna network A.

The antenna network A comprises a radio frequency transmitter with a digital-to-analogue converter and a radio frequency power amplifier, and a radio frequency receiver with an analogue-to-digital converter and a low noise amplifier which are not shown in fig. 4 for the sake of simplicity.

The bidirectional photonic radio transceiver BPRT has a first interface for receiving optical downlink data signals SDOWN on an optical downlink carrier frequency f_{down} and optical continuous wave signals CUP on an optical uplink carrier frequency fᵤₚ. The first interface is connected to an input of the wavelength selective fiber coupler FC. A first output of the wavelength selective fiber coupler FC is connected to an input of the opto-electrical converter OEC. A second output of the wavelength selective fiber coupler FC is connected to a first input of the electro-optical converter EOC. An output of the opto-electrical converter OEC is connected to the radio frequency transmitter of the antenna network A. The radio frequency receiver of the antenna network A is connected to a second input of the electro-optical converter EOC. An output of the electro-optical converter EOC is connected to a second interface for sending optical uplink data signals SUP on an optical uplink carrier frequency fᵤₚ.

The optical downlink data signals SDOWN on the optical downlink carrier frequency f_{down} and the optical continuous wave signals CUP on the optical uplink carrier frequency fᵤₚ are transmitted to the combined optical and radio remote access stations CORAS on a common optical connection, e.g. a common optical fiber, and are received at the first interface of the bidirectional photonic radio transceiver BPRT.

The optical downlink data signals SDOWN on the optical downlink carrier frequency f_{down} and the optical continuous wave signals CUP on the optical uplink carrier frequency fᵤₚ are separated in the wavelength selective fiber coupler FC.

The optical downlink data signals SDOWN on the optical downlink carrier frequency f_{down} are transmitted to the opto-electrical converter OEC, and the optical continuous wave signals CUP on the optical uplink carrier frequency fᵤₚ are transmitted to the electro-optical converter EOC.

The optical downlink data signals SDOWN are converted to electrical downlink data signals in the opto-electrical converter OEC.

Preferably, said opto-electrical converter OEC comprises a so-called PIN-diode or a so-called avalanche-photo-diode.

The electrical downlink data signals are transmitted to the radio frequency transmitter of the antenna network A from which the downlink data signals are transmitted to terminals via wireless connections.

Uplink data signals SUP are transmitted from terminals to the combined optical and radio remote access station CORAS on wireless connections and are received at the antenna network A.

In the antenna network A, the electrical uplink data signals are amplified in the low noise amplifier and converted to the digital domain and are sent to the electro-optical converter EOC.

In the electro-optical converter EOC, the electrical uplink data signals are modulated on the optical uplink carrier frequency by means of the optical continuous wave signal CUP received from the wavelength selective fiber coupler FC resulting in optical uplink data signals.

Preferably, said electro-optical converter EOC comprises an electroabsorption or lithiumniobate modulator for modulating the optical continuous wave signal CUP received from the wavelength selective fiber coupler FC.

From the electro-optical converter EOC, the optical uplink data signals are transmitted via the second interface of the bidirectional photonic radio transceiver BPRT.

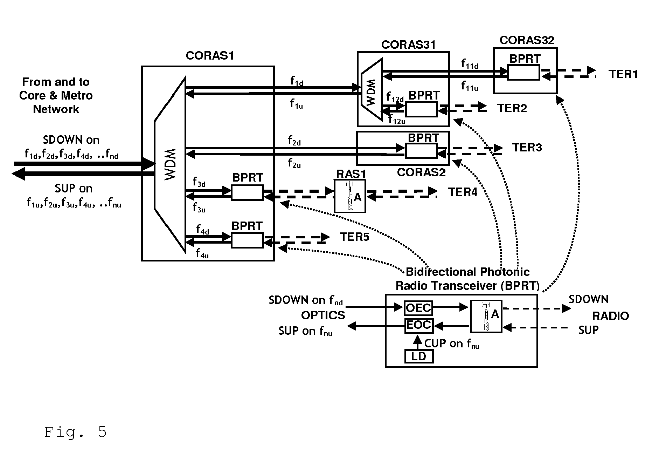

Fig. 5 schematically shows a communication network architecture applying wavelength division multiplexing with a combined optical and radio access by bidirectional photonic radio transceivers BPRT with an intrinsic light source for generating an optical uplink carrier frequency fᵤₚ according to an embodiment of the invention as described above under fig. 3.

The communication network in fig. 5 in principle corresponds to the communication network that is depicted in fig. 2 and described above. However, wavelength division multiplexers WDM, bidirectional photonic radio transceivers BPRT, and frequencies and signals which are used in this embodiment are additionally depicted in fig. 5. Fore the sake of simplicity, only five terminals TER1-TER5 are depicted in fig. 5.

The combined optical and radio remote access station CORAS1 comprises a wavelength division multiplexer WDM for demultiplexing the optical frequency band into four optical frequency subbands, and two bidirectional photonic radio transceivers BPRT as described above in fig. 3.

The combined optical and radio remote access station CORAS31 comprises a wavelength division multiplexer WDM for demultiplexing the optical frequency band into two optical frequency subbands, and one bidirectional photonic radio transceiver BPRT as described above in fig. 3.

The combined optical and radio remote access stations CORAS32 and CORAS2 each comprise a bidirectional photonic radio transceiver BPRT as described above in fig. 3.

Optical downlink data signals SDOWN for the different terminals are transmitted in different optical frequency subbands f_{1d}, f_{2d}, f_{3d}, f_{4d}, ... f_{nd} from the core and metro network to the combined optical and radio remote access station CORAS1.

In the wavelength division multiplexer WDM of the combined optical and radio remote access station CORAS1, the optical downlink data signals SDOWN for the different terminals are demultiplexed by way of example into the optical frequency subbands f_{1d}, f_{2d}, f_{3d}, f_{4d} in order to be able to forward them to the respective terminal TER5 or remote access station CORAS2, CORAS31 and RAS1.

The optical frequency subband f_{1d} comprises the optical downlink data signals for the terminals TER1, TER2 served by the combined optical and radio remote access stations CORAS31 and CORAS32.

The optical downlink data signals in the optical frequency subband f_{1d} are transmitted from the combined optical and radio remote access station CORAS1 to the combined optical and radio remote access stations CORAS31.

In the wavelength division multiplexer WDM of the combined optical and radio remote access station CORAS31, the optical downlink data signals in the optical frequency subband f_{1d} for the terminals TER1, TER2 served by the combined optical and radio remote access stations CORAS31 and CORAS32 are demultiplexed by way of example into the optical frequency subbands f_{11d} and f_{12d} in order to be able to forward them to the terminal TER2 served by the combined optical and radio remote access station CORAS31 and to the remote access station CORAS32 respectively.

The optical downlink data signals in the optical frequency subband f_{11d} are transmitted from the combined optical and radio remote access station CORAS31 to the combined optical and radio remote access stations CORAS32, in which the optical downlink data signals are converted to electrical downlink data signals in a bidirectional photonic radio transceiver BPRT as described above in fig. 3 and transmitted to the terminal TER1 via a wireless connection.

The optical downlink data signals on the optical frequency subband f_{12d} are converted in the combined optical and radio remote access station CORAS31 to electrical downlink data signals in a bidirectional photonic radio transceiver BPRT as described above in fig. 3 and transmitted to the terminal TER2 via a wireless connection.

The optical downlink data signals in the optical frequency subband f_{2d} are transmitted from the combined optical and radio remote access station CORAS1 to the combined optical and radio remote access stations CORAS2, in which the optical downlink data signals are converted to electrical downlink data signals in a bidirectional photonic radio transceiver BPRT as described above in fig. 3 and transmitted to the terminal TER3 via a wireless connection.

The optical downlink data signals in the optical frequency subband f_{3d} are converted in the combined optical and radio remote access station CORAS1 to electrical downlink data signals in a bidirectional photonic radio transceiver BPRT as described above in fig. 3 and transmitted to the remote access station RAS1 via a wireless connection. The remote access station RAS1 in turn sends the downlink data signals to the terminal TER4.

The optical downlink data signals in the optical frequency subband f_{4d} are converted in the combined optical and radio remote access station CORAS1 to electrical downlink data signals in a bidirectional photonic radio transceiver BPRT as described above in fig. 3 and transmitted to the terminal TER5 via a wireless connection.

Uplink data signals from the terminals TER1-TER5 are transmitted to the respective remote access station CORAS32, CORAS31, CORAS2, RAS1 or CORAS1 via a wireless connection.

The uplink data signals which are received at the remote access station RAS1 are transmitted from the remote access station RAS1 to the combined optical and radio remote access station CORAS1.

In the combined optical and radio remote access station CORAS32, the respective uplink data signals of the terminal TER1 are converted from electrical uplink data signals to optical uplink data signals by means of modulating them on a respective optical uplink carrier frequency in the optical frequency subband f₁₁ᵤ in the bidirectional photonic radio transceiver BPRT as described above in fig. 3.

In the combined optical and radio remote access station CORAS31, the respective uplink data signals of the terminal TER2 are converted from electrical uplink data signals to optical uplink data signals by means of modulating them on a respective optical uplink carrier frequency in the optical frequency subband f₁₂ᵤ in the bidirectional photonic radio transceiver BPRT as described above in fig. 3.

In the combined optical and radio remote access station CORAS2, the respective uplink data signals of the terminal TER3 are converted from electrical uplink data signals to optical uplink data signals by means of modulating them on a respective optical uplink carrier frequency in the optical frequency subband f₂ᵤ in the bidirectional photonic radio transceiver BPRT as described above in fig. 3.

In the combined optical and radio remote access stations CORAS1, the respective uplink data signals of the terminal TER4 and the terminal TER5 are converted from electrical uplink data signals to optical uplink data signals by means of modulating them on an optical uplink carrier frequency in the optical frequency subband f₃ᵤ and f₄ᵤ respectively in the respective bidirectional photonic radio transceiver BPRT as described above in fig. 3.

The optical uplink data signals in the optical frequency subband f₁₁ᵤ are transmitted from the combined optical and radio remote access station CORAS32 to the combined optical and radio remote access stations CORAS31.

In the wavelength division multiplexer WDM of the combined optical and radio remote access station CORAS31, the optical uplink data signals of the terminals TER1 and TER2 are multiplexed into the optical frequency subband f₁ᵤ and forwarded to the combined optical and radio remote access station CORAS1.

The optical uplink data signals of the terminal TER3 in the optical frequency subband f₂ᵤ are transmitted from the combined optical and radio remote access station CORAS2 to the combined optical and radio remote access station CORAS1.

In the wavelength division multiplexer WDM of the combined optical and radio remote access station CORAS1, the optical uplink data signals of the terminals TER1-TER5 in the frequency subbands f₁ᵤ, f₂ᵤ, f₃ᵤ and f₄ᵤ are multiplexed and transmitted to the core and metro network.

The three combined optical and radio remote access stations CORAS1, CORAS31 and CORAS32 are interconnected serially by means of wavelength division multiplexers WDM and a bidirectional photonic radio transceiver BPRT according to the invention. The principle of serial interconnection of combined optical and radio remote access stations according to the invention can be used to extend the feeder reach lengths of remote access stations deliberately.

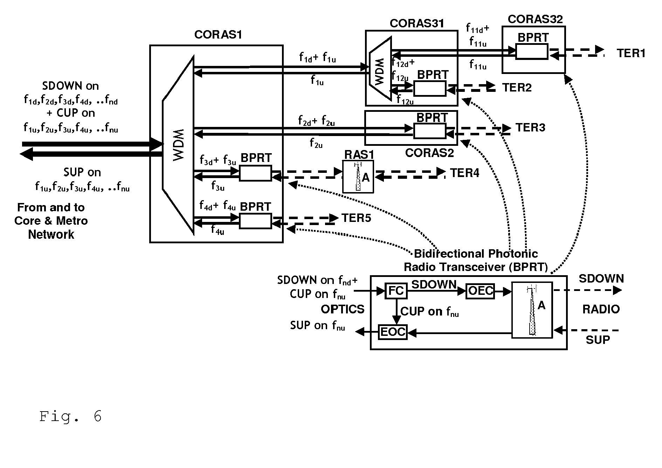

Fig. 6 schematically shows a communication network architecture applying wavelength division multiplexing with a combined optical and radio access by bidirectional photonic radio transceivers BPRT with remote light sources for generating optical uplink carrier frequencies fᵤₚ according to an embodiment of the invention as described above under fig. 4.

The communication network in fig. 6 is very similar to the communication network that is depicted in fig. 5 and described above, Thus, in the following, only the differences compared to the communication network in fig. 5 are described.

Instead of bidirectional photonic radio transceivers BPRT with an intrinsic light source as depicted in fig. 3 and described above, bidirectional photonic radio transceivers BPRT working with remote light sources as depicted in fig. 4 and described above are used in fig. 6.

The transmission of the downlink data signals is analogue to the transmission as described under fig. 5.

However, as the bidirectional photonic radio transceivers BPRT do not comprise an intrinsic light source for generating optical continuous wave signals on optical uplink carrier frequencies for modulating uplink data signals on said optical uplink carrier frequencies, the optical continuous wave signals on different optical uplink carrier frequencies for the different terminals are generated e.g. in a gateway or in a specific device for generating said optical continuous wave signals in the core and metro network and transmitted from the core and metro network over an optical connection to the combined optical and radio remote access station CORAS1 and are further distributed to the different combined optical and radio remote access station CORAS1, CORAS2, CORAS31 and CORAS32.

The optical continuous wave signals CUP on the different optical uplink carrier frequencies are transmitted in different optical frequency subbands f₁ᵤ, f₂ᵤ, f₃ᵤ, f₄ᵤ, ... fₙᵤ from the core and metro network to the combined optical and radio remote access station CORAS1.

In the wavelength division multiplexer WDM of the combined optical and radio remote access station CORAS1, the optical continuous wave signals CUP on the different optical uplink carrier frequencies are demultiplexed by way of example into the optical frequency subbands f₁ᵤ, f₂ᵤ, f₃ᵤ, f₄ᵤ in order to be able to forward them to the bidirectional photonic radio transceiver BPRT of the respective combined optical and radio remote access station CORAS1, CORAS2, CORAS31 and CORAS32.

The optical frequency subband f₁ᵤ comprises the optical continuous wave signals on the optical uplink carrier frequencies which are used for modulating the uplink data signals of the terminals TER1 and TER2 served by the combined optical and radio remote access stations CORAS31 and CORAS32.

The optical continuous wave signals CUP on the optical uplink carrier frequencies in the optical frequency subband f₁ᵤ are transmitted to the combined optical and radio remote access station CORAS31.

In the wavelength division multiplexer WDM of the combined optical and radio remote access station CORAS31, the optical continuous wave signals on the optical uplink carrier frequencies which are used for modulating the uplink data signals of the terminals TER1 and TER2 served by the combined optical and radio remote access stations CORAS31 and CORAS32 are demultiplexed by way of example into the optical frequency subbands f₁₁ᵤ and f₁₂ᵤ in order to be able to forward them to the bidirectional photonic radio transceiver BPRT of the combined optical and radio remote access station CORAS32, and the combined optical and radio remote access station CORAS31 respectively.

The optical continuous wave signals on the optical uplink carrier frequency in the optical frequency subband f₁₁ᵤ are transmitted from the combined optical and radio remote access station CORAS31 to the bidirectional photonic radio transceiver BPRT of the combined optical and radio remote access stations CORAS32, in which the uplink data signals of the terminal TER1 are modulated on the optical uplink carrier frequency in the optical frequency subband f₁₁ᵤ as described above in fig. 4.

The optical continuous wave signals on the optical uplink carrier frequency in the optical frequency subband f₁₂ᵤ are transmitted to the bidirectional photonic radio transceiver BPRT of the combined optical and radio remote access stations CORAS31, in which the uplink data signals of the terminal TER2 are modulated on the optical uplink carrier frequency in the optical frequency subband f₁₂ᵤ as described above in fig. 4.

The optical frequency subband f₂ᵤ comprises the optical continuous wave signals on the optical uplink carrier frequency which are used for modulating the uplink data signals of the terminal TER3 served by the combined optical and radio remote access station CORAS2.

The optical continuous wave signals on the optical uplink carrier frequency in the optical frequency subband f₂ᵤ are transmitted from the combined optical and radio remote access station CORAS1 to the bidirectional photonic radio transceiver BPRT of the combined optical and radio remote access stations CORAS2, in which the uplink data signals of the terminal TER3 are modulated on the optical uplink carrier frequency in the optical frequency subband f₂ᵤ as described above in fig. 4.

The optical frequency subband f₃ᵤ comprises the optical continuous wave signals on the optical uplink carrier frequency which are used for modulating the uplink data signals of the terminal TER4 served by the remote access station RAS1.

The optical continuous wave signals on the optical uplink carrier frequency in the optical frequency subband f₃ᵤ are transmitted to the bidirectional photonic radio transceiver BPRT of the combined optical and radio remote access stations CORAS1, in which the uplink data signals of the terminal TER4 are modulated on the optical uplink carrier frequency in the optical frequency subband f₃ᵤ as described above in fig. 4.

The optical frequency subband f₄ᵤ comprises the optical continuous wave signals on the optical uplink carrier frequency which are used for modulating the uplink data signals of the terminal TER5 served by the combined optical and radio remote access stations CORAS1.

The optical continuous wave signals on the optical uplink carrier frequency in the optical frequency subband f₄ᵤ are transmitted to the bidirectional photonic radio transceiver BPRT of the combined optical and radio remote access stations CORAS1, in which the uplink data signals of the terminal TER5 are modulated on the optical uplink carrier frequency in the optical frequency subband f₄ᵤ as described above in fig. 4.

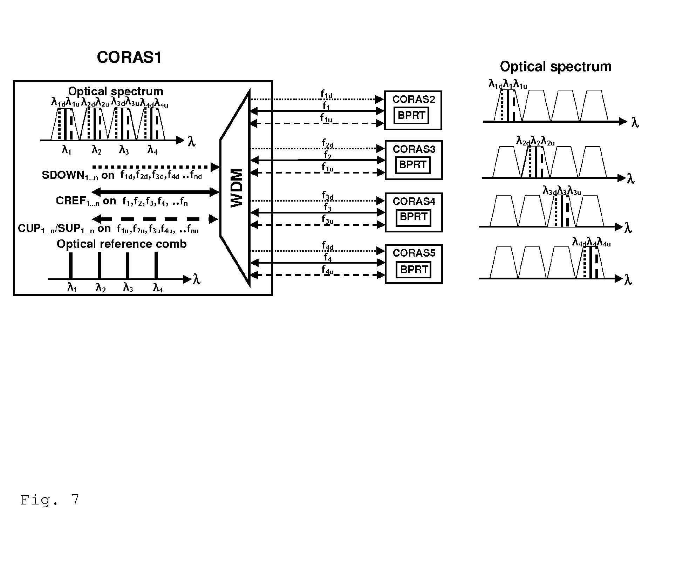

Fig. 7 schematically shows a communication network architecture applying wavelength division multiplexing with a combined optical and radio access by bidirectional photonic radio transceivers with central generation and distribution of optical reference carriers for heterodyne detection according to an embodiment of the invention.

The communication network in fig. 7 comprises five combined optical and radio remote access stations CORAS1-CORAS5. The combined optical and radio remote access station CORAS1 comprises a wavelength division multiplexer WDM, and the four combined optical and radio remote access stations CORAS2-CORAS5 each comprise a bidirectional photonic radio transceiver BPRT as described above in fig. 3 or fig. 4.

The combined optical and radio remote access stations CORAS1 is connected via optical connections to a core and metro network, which is not shown in fig. 7 for the sake of simplicity, and to the four combined optical and radio remote access stations CORAS2-CORAS5.

Downlink data signals on a baseband frequency f_{bb}, preferably in the frequency range 0-200 MHz, are modulated on different optical carrier frequencies for different terminals in the core and metro network e.g. in a gateway or in a specific device for optical modulation. Said optical downlink data signals SDOWN_{1...n} for the different terminals are transmitted on different optical carrier frequencies f_{1d}, f_{2d}, f_{3d}, f_{4d}, ... f_{nd} from the core and metro network to the combined optical and radio remote access station CORAS1.

In the wavelength division multiplexer WDM of the combined optical and radio remote access station CORAS1, the optical downlink data signals SDOWN_{1...4} for the different terminals are demultiplexed by way of example into optical downlink data signals for the different terminals on different optical carrier frequencies f_{1d}, f_{2d}, f_{3d}, f_{4d} and then forwarded to the respective combined optical and radio remote access stations CORAS2-CORAS5.

Furthermore, optical continuous wave reference signals CREF_{1...n} on different reference frequencies f₁,f₂,f₃,f₄, ...fₙ for the different terminals are generated in the core and metro network e.g. in a gateway or in a specific device for generating said optical continuous wave reference signals and are transmitted to the combined optical and radio remote access station CORAS1.

In the wavelength division multiplexer WDM of the combined optical and radio remote access station CORAS1, the optical continuous wave reference signals CREF_{1...4} for the different terminals are demultiplexed by way of example into optical continuous wave reference signals for the different terminals on different optical carrier frequencies f₁, f₂, f₃, f₄ and then forwarded to the respective combined optical and radio remote access stations CORAS2-CORAS5.

Each of said optical continuous wave reference signals CREF_{1...n} on different reference frequencies f₁,f₂,f₃,f₄, ...fₙ for the different terminals has a predefined frequency shift to the respective optical downlink data signal for the respective terminal on the respective optical carrier frequency f_{1d}, f_{2d}, f_{3d}, f_{4d}, ...f_{nd}. Said predefined frequency shift f_{nd}-fₙ corresponds to a radio frequency f_{rf} preferably in the frequency range of several hundreds of MHz to several GHz on which the downlink data signals shall be upconverted. The optical continuous wave reference signal and the respective optical downlink data signal are used for optical heterodyne detection resulting in a radio frequency downlink data signal on the carrier frequency f_{rf}. Said heterodyne detection is performed in the bidirectional photonic radio transceiver of the respective combined optical and radio remote access station CORAS2-CORAS5.

In an embodiment of the invention, the optical continuous wave reference signals CREF_{1...4} on the different reference frequencies f₁, f₂, f₃, f₄ for the different terminals are also used for optical heterodyne detection of optical uplink data signals. For this purpose, the optical continuous wave reference signals CREF_{1...4} are fed back from the respective combined optical and radio remote access station CORAS2-CORAS5 to the combined optical and radio remote access station CORAS1.

The optical uplink data signals SUP_{1...4} on different optical carrier frequencies f₁ᵤ, f₂ᵤ, f₃ᵤ, f₄ᵤ of the different terminals are also transmitted from the respective combined optical and radio remote access stations CORAS2-CORAS5 to the combined optical and radio remote access station CORAS1.

In the wavelength division multiplexer WDM of the combined optical and radio remote access station CORAS1, the optical continuous wave reference signals CREF_{1...4} for the different terminals and the optical uplink data signals SUP_{1...4} on different optical carrier frequencies f₁ᵤ, f₂ᵤ, f₃ᵤ, f₄ᵤ of the different terminals are multiplexed and transmitted to the core and metro network.

Each of said optical continuous wave reference signals CREF_{1...n} on different reference frequencies f₁, f₂, f₃, f₄, ...fₙ for the different terminals has a predefined frequency shift to the respective optical uplink data signal for the respective terminal on the respective optical carrier frequency f₁ᵤ, f₂ᵤ, f₃ᵤ, f₄ᵤ, ...fₙᵤ Said predefined frequency shift fₙ-fₙᵤ corresponds to a radio frequency f'_{rf} preferably in the frequency range of several hundreds of MHz to several GHz on which the uplink data signals shall be upconverted.

The predefined frequency shift fₙ-fₙᵤ to the respective optical uplink data signal may be the same as the predefined frequency shift f_{nd}-fₙ to the respective optical downlink data signal in order to have a common radio frequency f'_{rf}=f_{rf} on which the uplink and the downlink data shall be upconverted. In this case, the respective optical uplink and downlink signals are symmetrically arranged around the different optical continuous wave reference signals CREF_{1...4} on the different reference frequencies f₁, f₂, f₃, f₄, which is shown in the optical spectra depicted in fig. 7.

The optical continuous wave reference signal and the respective optical uplink data signal are used for optical heterodyne detection resulting in a radio frequency uplink data signal on the carrier frequency f_{rf}. Said heterodyne detection is performed in the core and metro network e.g. in a gateway or in a specific device for heterodyne detection.

Advantages of the above described embodiment of the invention are, that by using optical heterodyning, the need for electrical upconversion is dropped, and the signal processing in the electrical domain of the uplink and downlink data signals is performed on a baseband frequency level preferably in the frequency range 0-200 MHz at considerably reduced speed and hence reduced power dissipation and chip complexity.

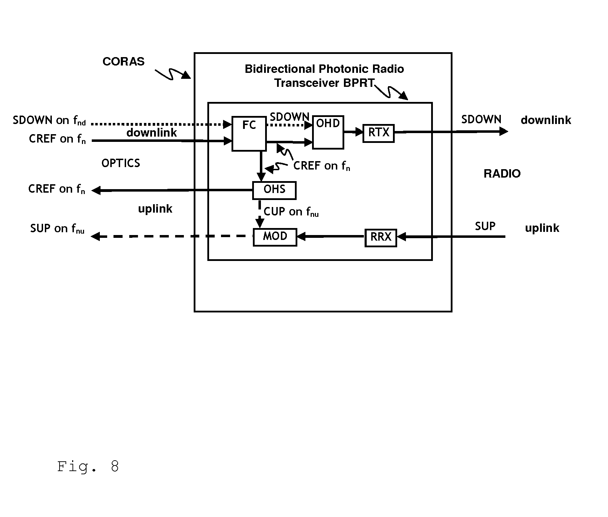

Fig. 8 schematically shows a combined optical and radio remote access station CORAS with a bidirectional photonic radio transceiver BPRT for heterodyne detection with an intrinsic light source for generating the optical uplink carrier frequency according to an embodiment of the invention.

The bidirectional photonic radio transceiver BPRT comprises a wavelength selective fiber coupler FC, an optical heterodyne detector OHD, a radio transmitter RTX, an optical heterodyne source OHS, an optical modulator MOD, and a radio receiver RRX.

The bidirectional photonic radio transceiver BPRT has a first interface for receiving optical downlink data signals SDOWN on an optical downlink carrier frequency f_{nd}, and optical continuous wave reference signals CREF on the reference frequency fₙ. The first interface is connected to an input of the wavelength selective fiber coupler FC.

A first output of the wavelength selective fiber coupler FC is connected to an input of the optical heterodyne detector OHD. A second output of the wavelength selective fiber coupler FC is connected to an input of the optical heterodyne source OHS.

An output of the optical heterodyne detector OHD is connected to an input of the radio transmitter RTX, and an output of the radio transmitter RTX is connected to an air interface which is not shown in fig. 8 for the sake of simplicity.

An input of the radio receiver RRX is connected to the air interface which is also not shown in fig. 8 for the sake of simplicity. An output of the radio receiver RRX is connected to a first input of the optical modulator MOD.

A first output of the optical heterodyne source OHS is connected to a second input of the optical modulator MOD, and a second output of the optical heterodyne source OHS and an output of the optical modulator MOD are connected to a second interface of the bidirectional photonic radio transceiver BPRT for sending optical uplink data signals SUP on an optical uplink carrier frequency fₙᵤ and optical continuous wave reference signals CREF on the reference frequency fₙ.

Downlink data signals SDOWN on a baseband frequency f_{bb}, preferably in the frequency range 0-200 MHz, are modulated on an optical carrier frequency f_{nd} in the core and metro network e.g. in a gateway or in a specific device for optical modulation resulting in optical downlink data signals SDOWN on the optical downlink carrier frequency f_{nd}.

Furthermore, optical continuous wave reference signals CREF on a reference frequency fₙ are generated in the core and metro network e.g. in a gateway or in a specific device for generating said optical continuous wave reference signals.

The optical downlink data signals SDOWN on the optical downlink carrier frequency f_{nd} and the optical continuous wave reference signals CREF on the reference frequency fₙ are transmitted from the core and metro network to the combined optical and radio remote access stations CORAS on an optical connection and are received at the first interface of the bidirectional photonic radio transceiver BPRT.

The optical downlink data signals SDOWN on the optical downlink carrier frequency f_{nd} and the optical continuous wave reference signals CREF on the reference frequency fₙ are separated in the wavelength selective fiber coupler FC for transmission to the optical heterodyne detector OHD and to the optical heterodyne source OHS.

A first part of the optical continuous wave reference signals CREF on the reference frequency fₙ is transmitted from the wavelength selective fiber coupler FC to the optical heterodyne detector OHD, and a second part of the optical continuous wave reference signals CREF on the reference frequency fₙ is transmitted to the optical heterodyne source OHS.

The optical downlink data signals SDOWN on the optical downlink carrier frequency f_{nd} are transmitted from the wavelength selective fiber coupler FC to the optical heterodyne detector OHD.

The optical continuous wave reference signals CREF and the optical downlink data signals SDOWN are used for optical heterodyne detection in the optical heterodyne detector OHD resulting in radio frequency downlink data signals on the carrier frequency f_{rf}=f_{nd}-fₙ preferably in the frequency range of several hundreds of MHz to several GHz.

Preferably, said optical heterodyne detector OHD comprises a so-called PIN-diode or a so-called avalanche-photo-diode for heterodyne detection and conversion of optical data signals to electrical data signals.

The radio frequency downlink data signals on the carrier frequency f_{rf} are transmitted over the air interface via the radio transmitter RTX.

The optical heterodyne source OHS generates an optical continuous wave signal CUP on an optical uplink carrier frequency fₙᵤ which is transmitted to the optical modulator MOD.

Preferably, said optical heterodyne source OHS comprises a laser diode LD for generating said optical continuous wave signal CUP on the optical uplink carrier frequency fₙᵤ

Uplink data signals SUP are transmitted from a terminal to the combined optical and radio remote access station CORAS over the air interface and are received at the radio receiver RRX.

In the radio receiver RRX, the electrical uplink data signals are downconverted on a baseband frequency f_{bb}, preferably in the frequency range 0-200 MHz, and are sent to the optical modulator MOD.

In the optical modulator MOD, the electrical uplink data signals are modulated on the optical uplink carrier frequency fₙᵤ by means of the optical continuous wave signal CUP received from the optical heterodyne source OHS resulting in optical uplink data signals.

Preferably, said optical modulator MOD comprises an electroabsorption or lithiumniobate modulator for modulating the optical continuous wave signal CUP received from the optical heterodyne source OHS.

From the optical modulator MOD, the optical uplink data signals SUP are transmitted via the second interface of the bidirectional photonic radio transceiver BPRT to the core and metro network.

From the optical heterodyne source OHS, the optical continuous wave reference signals CREF on the reference frequency fₙ are transmitted via the second interface of the bidirectional photonic radio transceiver BPRT to the core and metro network.

In an alternative implementation of the embodiment of the invention, the optical continuous wave reference signals CREF on the reference frequency fₙ are not transmitted from the wavelength selective fiber coupler FC to the optical heterodyne source OHS, but are directly transmitted from the wavelength selective fiber coupler FC via the second interface of the bidirectional photonic radio transceiver BPRT to the core and metro network.

The optical continuous wave reference signals CREF and the optical uplink data signals SUP are used for optical heterodyne mixing in the core and metro network e.g. in a gateway or in a specific device for heterodyne detection resulting in radio frequency uplink data signals on the carrier frequency f'_{rf=} fₙ-fₙᵤ preferably in the frequency range of several hundreds of MHz to several GHz.

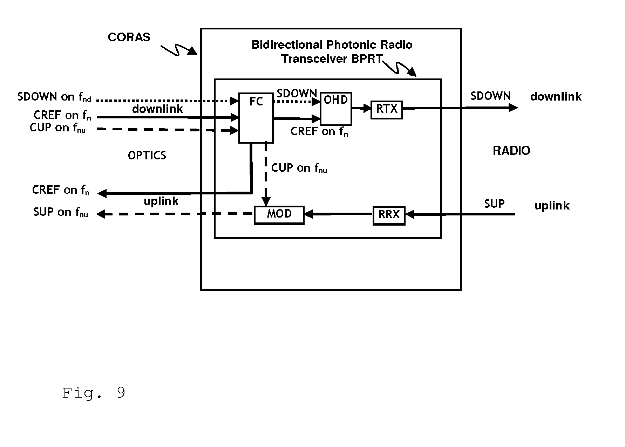

Fig. 9 schematically shows a combined optical and radio remote access station CORAS with a bidirectional photonic radio transceiver for heterodyning with a remote light source for generating the optical uplink carrier frequency according to an embodiment of the invention.

The bidirectional photonic radio transceiver BPRT comprises a wavelength selective fiber coupler FC, an optical heterodyne detector OHD, a radio transmitter RTX, an optical modulator MOD, and a radio receiver RRX.

The bidirectional photonic radio transceiver BPRT has a first interface for receiving optical downlink data signals SDOWN on an optical downlink carrier frequency f_{nd}, optical continuous wave reference signals CREF on the reference frequency fₙ, and optical continuous wave signal CUP on an optical uplink carrier frequency fₙᵤ The first interface is connected to an input of the wavelength selective fiber coupler FC.

A first output of the wavelength selective fiber coupler FC is connected to an input of the optical heterodyne detector OHD. A second output of the wavelength selective fiber coupler FC is connected to a first input of the optical modulator MOD.

An output of the optical heterodyne detector OHD is connected to an input of the radio transmitter RTX, and an output of the radio transmitter RTX is connected to an air interface which is not shown in fig. 9 for the sake of simplicity.

An input of the radio receiver RRX is connected to the air interface which is also not shown in fig. 8 for the sake of simplicity. An output of the radio receiver RRX is connected to a second input of the optical modulator MOD.

An output of the optical modulator MOD is connected to a second interface of the bidirectional photonic radio transceiver BPRT for sending optical uplink data signals SUP on an optical uplink carrier frequency fₙᵤ and optical continuous wave reference signals CREF on the reference frequency fₙ.

Downlink data signals on a baseband frequency f_{bb}, preferably in the frequency range 0-200 MHz, are modulated on an optical carrier frequency f_{nd} in the core and metro network e.g. in a gateway or in a specific device for optical modulation resulting in optical downlink data signals SDOWN on the optical downlink carrier frequency f_{nd}.

Furthermore, optical continuous wave reference signals CREF on a reference frequency fₙ, and optical continuous wave signal CUP on an optical uplink carrier frequency fₙᵤ are generated in the core and metro network e.g. in a gateway or in a specific device for generating said optical continuous wave signals.

The optical downlink data signals SDOWN on the optical downlink carrier frequency f_{nd}, the optical continuous wave reference signals CREF on the reference frequency fₙ, and the optical continuous wave signal CUP on the optical uplink carrier frequency fₙᵤ are transmitted from the core and metro network to the combined optical and radio remote access stations CORAS on an optical connection and are received at the first interface of the bidirectional photonic radio transceiver BPRT.

The optical downlink data signals SDOWN on the optical downlink carrier frequency f_{nd}, the optical continuous wave reference signals CREF on the reference frequency fₙ, and the optical continuous wave signal CUP on the optical uplink carrier frequency fₙᵤ are separated in the wavelength selective fiber coupler FC for transmission to the optical heterodyne detector OHD, to the optical modulator MOD, and to the second interface of the bidirectional photonic radio transceiver BPRT.

A first part of the optical continuous wave reference signals CREF on the reference frequency fₙ is transmitted from the wavelength selective fiber coupler FC to the optical heterodyne detector OHD, and a second part of the optical continuous wave reference signals CREF on the reference frequency fₙ is transmitted via the second interface of the bidirectional photonic radio transceiver BPRT to the core and metro network.

The optical downlink data signals SDOWN on the optical downlink carrier frequency f_{nd} are transmitted from the wavelength selective fiber coupler FC to the optical heterodyne detector OHD.

The optical continuous wave reference signals CREF and the optical downlink data signals SDOWN are used for optical heterodyne detection in the optical heterodyne detector OHD resulting in radio frequency downlink data signals on the carrier frequency f_{rf}=f_{nd}-fₙ preferably in the frequency range of several hundreds of MHz to several GHz.

Preferably, said optical heterodyne detector OHD comprises a so-called PIN-diode or a so-called avalanche-photo-diode for heterodyne detection and conversion of optical data signals to electrical data signals.

The radio frequency downlink data signals on the carrier frequency f_{rf} are transmitted over the air interface via the radio transmitter RTX.

The optical continuous wave signal CUP on the optical uplink carrier frequency fₙᵤ is transmitted from the wavelength selective fiber coupler FC to the optical modulator MOD.

Uplink data signals SUP are transmitted from a terminal to the combined optical and radio remote access station CORAS over the air interface and are received at the radio receiver RRX.

In the radio receiver RRX, the electrical uplink data signals are downconverted on a baseband frequency f_{bb}, preferably in the frequency range 0-200 MHz, and are sent to the optical modulator MOD.

In the optical modulator MOD, the electrical uplink data signals are modulated on the optical uplink carrier frequency fₙᵤ by means of the optical continuous wave signal CUP received from the wavelength selective fiber coupler FC resulting in optical uplink data signals SUP.

Preferably, said optical modulator MOD comprises an electroabsorption or lithiumniobate modulator for modulating the optical continuous wave signal CUP received from the wavelength selective fiber coupler FC.

From the optical modulator MOD, the optical uplink data signals SUP are transmitted via the second interface of the bidirectional photonic radio transceiver BPRT to the core and metro network.

The optical continuous wave reference signals CREF and the optical uplink data signals SUP are used for optical heterodyne detection in the core and metro network e.g. in a gateway or in a specific device for heterodyne detection resulting in radio frequency uplink data signals on the carrier frequency f'_{rf=} fₙ-fₙᵤ preferably in the frequency range of several hundreds of MHz to several GHz.

In all the embodiments of the invention described above, the optical downlink traffic and the optical uplink traffic can either be transmitted via separate optical fibers for uplink and downlink traffic, or via a common optical fiber for uplink and downlink traffic.

## Claims

1. A method for bidirectional transmission of signals between a first device (CORAS1) and at least one further device (TER3) via at least one intermediate device (CORAS2), **characterized in, that**
• an optical downlink data signal is transmitted on an optical downlink carrier frequency from the first device (CORAS1) to said at least one intermediate device (CORAS2),
• the optical downlink data signal is converted to an electrical downlink data signal in one of said at least one intermediate device (CORAS2),
• the electrical downlink data signal is transmitted from said one of said at least one intermediate device (CORAS2) to the at least one further device (TER3) via a wireless connection,
• an uplink data signal is transmitted from the at least one further device (TER3) to said one of said at least one intermediate device (CORAS2) via a wireless connection,
• the electrical uplink data signal is modulated on an optical uplink carrier frequency in said one of said at least one intermediate device (CORAS2) resulting in an optical uplink data signal,
• and said optical uplink data signal is transmitted from said one of said at least one intermediate device (CORAS2) to the first device (CORAS1).

2. A method according to claim 1, **characterized in, that**
• a laser diode (LD) in said one of said at least one intermediate device (CORAS2) generates an optical continuous wave signal on the optical uplink carrier frequency,
• and the electrical uplink data signal is modulated on the optical uplink carrier frequency using said optical continuous wave signal.

3. A method according to claim 1, **characterized in, that**
• an optical continuous wave signal on the optical uplink carrier frequency is transmitted from the first device (CORAS1) to said one of said at least one intermediate device (CORAS2),
• and the electrical uplink data signal is modulated on the optical uplink carrier frequency using said optical continuous wave signal.

4. A method according to claim 3, **characterized in, that**
• the optical downlink data signal and the optical continuous wave signal on the optical uplink carrier frequency are transmitted from the first device (CORAS1) to said one of said at least one intermediate device (CORAS2) over a common optical connection,
• and the optical downlink data signal and the optical continuous wave signal on the optical uplink carrier frequency are separated in a wavelength selective fiber coupler (FC).

5. A method according to claim 1, 2, 3 or 4, **characterized in, that**
• an optical continuous wave reference signal on a reference frequency is transmitted from the first device (CORAS1) to said one of said at least one intermediate device (CORAS2), said optical continuous wave reference signal having a predefined frequency shift to the optical downlink data signal,
• and the optical continuous wave reference signal and the optical downlink data signal are used for optical heterodyne detection resulting in a radio frequency downlink data signal in said one of said at least one intermediate device (CORAS2).

6. A method according to claim 5, **characterized in, that**
• a part of the optical continuous wave reference signal on the reference frequency is fed back from said one of said at least one intermediate device (CORAS2) to the first device (CORAS1),
• the optical continuous wave reference signal has a predefined frequency shift to the optical uplink data signal,
• and the optical continuous wave reference signal and the optical uplink data signal are used for optical heterodyne detection of the radio frequency uplink data signal.

7. A method according to claim 1, 2, 3, 4, 5 or 6, **characterized in, that**
• the first device (CORAS1) or at least one of said at least one intermediate device (CORAS31) comprises at least one wavelength division multiplexer (WDM) for multiplexing optical downlink signals or demultiplexing optical uplink signals,
• at least two connections are established from the first device (CORAS1) or the at least one of said at least one intermediate device (CORAS31) to at least one of said at least one further device (TER2, TER5) or to at least one other of said at least one intermediate device (CORAS2, CORAS32) for optical or electrical transmission of the wavelength-separated optical downlink or optical uplink signals.

8. A method according to claim 1, **characterized in, that** said first device (CORAS1) is a base station, said at least one further device (TER) is a mobile terminal, and said at least one intermediate device (CORAS2) is a remote antenna station.

9. A transceiver (BPRT) for transmission and reception of optical and electrical signals **characterized in, that** the transceiver (BPRT) comprises at least one processing means for
• reception of an optical downlink data signal (SDOWN) on an optical downlink carrier frequency,
• conversion of the optical downlink data signal to an electrical downlink data signal (OEC),
• transmission of the electrical downlink data signal over a wireless connection (A),
• reception of an uplink data signal (SUP) over a wireless connection (A),
• modulation of the electrical uplink data signal on an optical uplink carrier frequency resulting in an optical uplink data signal (EOC),
• and transmission of said optical uplink data signal.

10. A transceiver (BPRT) according to claim 9, **characterized in, that** said at least one processing means is for
• reception of an optical continuous wave signal (CUP) on the optical uplink carrier frequency,
• and modulation of the electrical uplink data signal on the optical uplink carrier frequency using said optical continuous wave signal.

11. A transceiver (BPRT) according to claim 10, **characterized in, that** said at least one processing means is for
• reception of the optical downlink data signal (SDOWN) and the optical continuous wave signal (CUP) on the optical uplink carrier frequency over a common optical fiber,
• and separation of the optical downlink data signal from the optical continuous wave signal on the optical uplink carrier frequency (FC).

12. A transceiver (BPRT) according to claim 9, 10 or 11, **characterized in, that** said at least one processing means is for
• reception of an optical continuous wave reference signal (CREF) on a reference frequency, said optical continuous wave reference signal having a predefined frequency shift to the optical downlink data signal (SDOWN),
• and using the optical continuous wave reference signal and the optical downlink data signal for optical heterodyne detection (OHD) resulting in a radio frequency downlink data signal.

13. A transceiver (BPRT) according to claim 12, **characterized in, that** said at least one processing means is for feeding back a part of the optical continuous wave reference signal (CREF) on the reference frequency.

14. A base station (BS) or a remote antenna station (CORAS1), **characterized in, that** said base station or said remote antenna station comprises a transceiver (BPRT) according to claim 9, 10, 11, 12 or 13.

15. A communication network comprising at least one base station (BS) or at least one remote antenna station (CORAS1) according to claim 14.
